# NOUVEAU FASCICULE DE BREVET EUROPEEN

(11) **EP 0 821 651 B2**
(45) Date de publication et mention de la décision concernant l'opposition: **28.09.2005**
(45) Mention de la délivrance du brevet: 07.07.1999
(21) Numéro de dépôt: 96915062.2
(22) Date de dépôt: 19.04.1996
(51) Int. Cl.: B44C 3/04, B25G 1/10, B65D 85/72

(54) **PROCEDE DE REALISATION D'ELEMENTS MECANIQUES NOTAMMENT A SURFACE EXTERNE REMODELABLE**
VERFAHREN ZUR HERSTELLUNG VON MECHANISCHEN ELEMENTEN, INSBESONDERE VON JENEN MIT WIEDERFORMBAREN ÄUSSEREN OBERFLÄCHEN
PROCESS FOR PRODUCING MECHANICAL ELEMENTS, IN PARTICULAR WITH AN EXTERNAL SURFACE WHICH CAN BE REMODELLED

(30) Priorité: 21.04.1995 FR 9504813
(43) Date de publication de la demande: 04.02.1998
(73) Titulaire: Rosier, Pascal, 75012 Paris (FR); Sansarlat, Jean-Jacques, 92500 Rueil-Malmaison (FR)
(72) Inventeur: Rosier, Pascal, 75012 Paris (FR); Sansarlat, Jean-Jacques, 92500 Rueil-Malmaison (FR)
(74) Mandataire: Sauvage, Renée
(86) Numéro de dépôt international: PCT/FR1996/000602
(87) Numéro de publication internationale: WO 1996/033075

(56) Documents cités:
- WO-A-94/03211
- CA-A- 816 269
- DE-A- 2 538 590
- DE-B- 2 634 656
- FR-A- 2 600 933
- GB-A- 1 096 545
- US-A- 4 483 333
- US-A- 4 595 713
- US-A- 4 785 495

## Description

La présente invention concerne la réalisation d'une piece mécanique conçue pour permettre d'exercer sur un objet une force efficace à le manoeuvrer.

On a proposé dans la technique antérieure divers moyens permettant de réaliser une empreinte de la forme d'objets à l'aide de produits divers. Les produits habituellement utilisés pour réaliser de telles empreintes vont du plâtre de moulage aux résines de synthèse plus ou moins fluides, que l'on place habituellement dans des moules portant l'empreinte de l'objet à reproduire, de façon à les appliquer sur celui-ci, puis que l'on fait durcir par réaction chimique, ou photochimique. Ce type de technique présente plusieurs inconvénients.

Un premier inconvénient est qu'il nécessite la manipulation d'outillage et le dosage de produits chimiques, ce qui en rend l'utilisation non accessible à la plupart des utilisateurs potentiels.

Un second inconvénient est son caractère irréversible, qui rend quasi impossible d'une part la mise en oeuvre de retouches de la forme et de la dimension de l'empreinte obtenue, lorsque celle-ci n'est pas conforme aux souhaits de l'utilisateur, et d'autre part la réutilisation du produit pour une autre application.

Un troisième inconvénient est que ce type de technique nécessite l'utilisation de moyens permettant d'assurer le maintien du produit en attendant son durcissement, par exemple à l'aide d'un moule.

On connaît également des produits de synthèse du type polycaprolactone qui sont utilisés dans le domaine industriel en tant qu'adjuvants pour améliorer certaines caractéristiques des polymères. Ces produits ont une température de fusion de l'ordre de 60°C, ce qui les rend facilement malléables.

On a proposé dans le brevet US-A-4.785.495 de réaliser des poignées de véhicule à deux roues constituées d'un produit déformable à chaud sous l'action d'un sèche cheveux qui sont mises en conformité de la forme des mains de l'utilisateur, ce produit conservant sa forme après refroidissement.

Dans le brevet DE-B-2.634.656 on a proposé de réaliser des poignées de raquette de tennis dont la forme externe est mise en conformité de la main de l'utilisateur par injection d'une résine durcissable dans un volume constitué d'une paroi déformable.

On connaît également par le brevet US-A-4.595.713 un implant médical qui est utilisé dans la régénération de tissus souples et durs tels qu'un cartilage ou un os, et qui est constitué d'un matériau formé d'un mélange de caprolactone et de lactide. Le brevet US-A-4.483.333 concerne quant à lui un élément de moulage orthopédique qui est formé d'un mélange de polyéthylène et d'un polyester thermoplastique possédant un point de fusion situé entre 50° et 100° et qui peut comprendre notamment un produit d'epsilon-caprolactone. Le produit obtenu suivant ce brevet doit, en conséquence, ne pas assurer une liaison avec l'élément avec lequel il est en contact.

De même, le brevet WO-A-94 03211 se rapporte à un matériau destiné à réaliser des attelles, ou moulages orthopédiques, et qui comprend un polyester à haute densité moléculaire combiné avec un élément de remplissage cellulosique. Dans un mode de mise en oeuvre de ce brevet, le produit de moulage est constitué d'un polyepsilon-caprolactone mélangé à d'autres éléments constitutifs. Dans un tel mode de mise en oeuvre, le produit de type polycaprolactone, ainsi que dans le brevet précédent, constitue, en lui-même, un élément mécanique, mais n'est pas en association avec au moins un objet.

La présente invention a pour but de proposer un moyen permettant de réaliser des éléments mécaniques les plus divers, ce moyen étant facile et rapide à mettre en oeuvre et permettant de plus une modification ultérieure de la conformation obtenue, jusqu'à l'obtention du résultat souhaité par l'utilisateur.

La présente invention a ainsi pour objet une utilisation d'une polycoprolactone selon la revendication 1. D'autres caractéristiques ressortent des revendications dépendantes.

Suivant l'invention la solidarisation dudit produit avec ledit objet s'entend d'un contact intime de ces éléments excluant tout collage entre eux. Cette solidarisation sera telle que, suivant la forme spécifique de l'objet sur lequel est disposé le produit, il y aura ou non possibilité de démontage du produit et de l'objet. Ainsi le produit disposé sur une vis constituera un écrou qui sera démontable, alors que ce même produit disposé sur une lame de scie ne sera pas, quant à lui, démontable.

La présente invention permet la réalisation d'un élément mécanique comprenant au moins un objet recouvert sur une partie de sa surface par un produit du type polycaprolactone solidarisé dudit objet de façon à faire corps avec lui.

Dans un mode de mise en oeuvre de l'invention, on dispose le produit entre au moins une partie de la surface externe d'au moins deux objets, de façon qu'il occupe le volume compris entre ces surfaces externes et se mette en parfaite conformation de la dimension et de la forme de ceux-ci.

Dans une variante intéressante de ce mode de mise en oeuvre de l'invention l'un des objets peut être un élément d'outil.

Dans les dessins :
La figure 1 est une vue en coupe verticale d'un pied de table illustrant un mode de mise en oeuvre de non conforme à l'invention.
Les figures 2 et 2a sont des vues en coupe axiale et longitudinale de modes de mise en oeuvre de l'invention appliqués au domaine de l'outillage.
Les figures 3 et 3a sont des vues en coupe partielle de deux autres modes de mise en oeuvre de l'invention également appliqués au domaine de l'outillage.
La figure 4 est une vue en coupe partielle d'un autre mode de mise en oeuvre non conforme à l'invention appliqué au domaine des armes.
La figure 5, est une vue en coupe verticale d'un autre mode de mise en oeuvre de l'invention appliqué au domaine de l'outillage.
La figure 5a illustre un mode de mise en oeuvre qui ne fait pas partie de l'invention.
Les figures 7 et 8 sont des vues en coupe de deux autres modes de mise en oeuvre non conforme à l'invention.
La figure 9 est une vue en coupe d'un moyen de stockage et de chauffage d'un produit mis en oeuvre dans l'utilisation suivant l'invention.

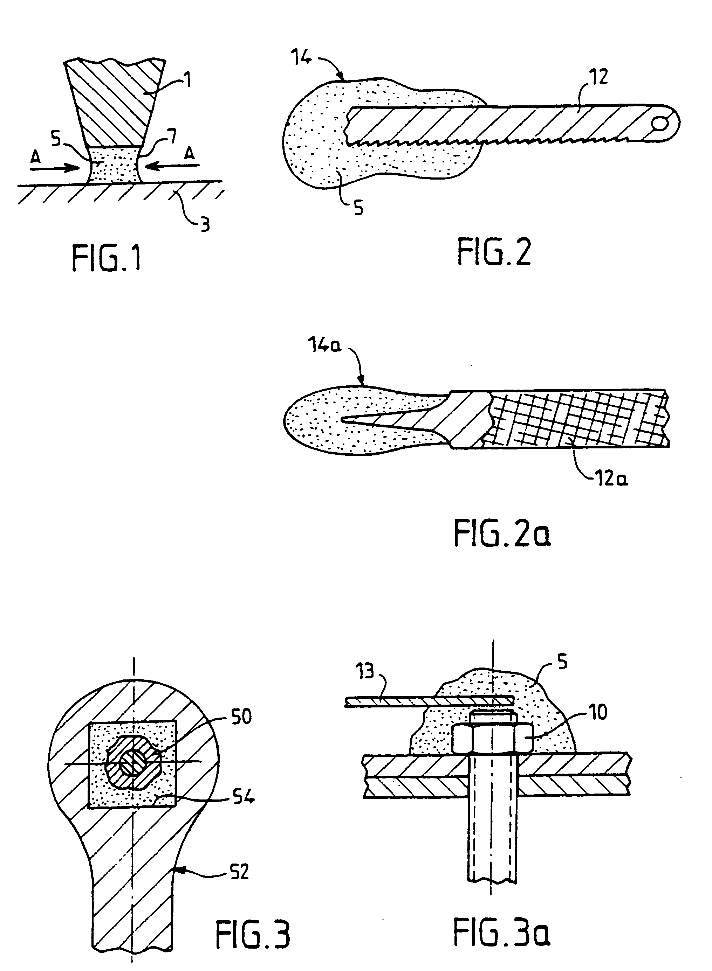

On a représenté sur la figure 1 un premier exemple de réalisation d'un élément mécanique qui est constitué d'une cale. On souhaite dans cet exemple assurer le calage d'un pied de meuble 1 qui se trouve à une certaine distance du sol 3 lorsque ledit meuble se trouve en appui sur ses autres pieds, non représentés sur le dessin.

Dans une première étape de mise en oeuvre, on introduit une pastille d'un produit 5, constituée d'un polymère du type polycaprolactone, dans un récipient d'eau portée à une température voisine de sa température de fusion de 60°C, jusqu'à ce que la pastille ait subi un ramollissement important. Lorsque celle-ci est suffisamment malléable pour pouvoir être déformée facilement par une pression de la main de l'utilisateur, on l'introduit entre le pied 1 et le sol 3, tout en exerçant sur sa périphérie une contrainte dans le sens des flèches A, ce qui a pour effet, d'une part, de combler le vide existant entre le sol 3 et la base du pied 1 et, d'autre part, de mettre en forme la périphérie 7 du produit 5. Le contact du sol 3 et de la base du pied 1 sur le produit 5 provoque un refroidissement très rapide de celui-ci, si bien que seulement quelques dizaines de secondes sont nécessaires pour qu'il ait atteint une rigidité suffisante pour conserver à la fois la nouvelle forme et les nouvelles dimensions qui lui ont ainsi été conférées. On réalise ainsi une mise à la cote directe et automatique de la cale ainsi constituée, sans qu'il soit nécessaire d'effectuer une mesure quelconque préalable de l'espace séparant la face inférieure du pied 1 du sol 3.

Suivant l'invention l'élément mécanique peut être un outil. Elle permet en effet de réaliser des outils en partant d'éléments actifs les plus divers, en fonction des besoins spécifiques d'un utilisateur. Elle permet également de rendre à un outil détérioré sa fonction initiale, ou de lui en conférer une nouvelle.

A titre d'exemple, ainsi que représenté sur la figure 2, on peut ainsi constituer un outil dont l'élément actif est formé d'une lame de scie brisée 12 que l'on introduit dans un volume donné de produit 5 maintenu dans un état pâteux en le plongeant dans de l'eau chaude à une température voisine de sa température de fusion. Après refroidissement et durcissement du produit 5, celui-ce constitue, un moyen de préhension 14 efficace permettant de transformer la lame de scie brisée en un véritable outil. On pourrait également, comme représenté sur la figure 2a, constituer de la même façon un manche 14a sur une lime 12a.

La présente invention peut également être utilisée pour constituer un outil dont la forme est spécifique d'une application déterminée. Ainsi, on sait que la plupart des clés ne permettent pas de dévisser un écrou dont les pans ont été déformés par les usages successifs ou par la corrosion. Par ailleurs, il est indispensable de posséder la clé correspondant rigoureusement aux dimensions et à la forme de la tête de l'écrou que l'on souhaite solliciter. On a ainsi représenté sur la figure 3 un écrou 50, dont les pans sont détériorés. On a introduit cet écrou 50 dans un oeil carré 54 prévu dans une clé 52, puis on a rempli le volume libre, compris entre les parois de l'oeil 54 et l'écrou 50, avec un produit 5 de type polycaprolactone, préalablement rendu malléable par chauffage, afin qu'il occupe de la façon la plus complète possible ledit volume libre. Après refroidissement et durcissement du produit 5 la clé sur mesure ainsi constituée vient en contact avec la totalité de la périphérie de l'écrou 50, ce qui permet d'exercer sur celui-ci un couple de serrage/desserrage optimal.

Dans une variante de ce mode de mise en oeuvre de l'invention, il n'est pas nécessaire de posséder une clé dont les dimensions soient supérieures à celles de l'écrou à solliciter.

On a ainsi représenté sur la figure 3a un écrou 10 dont les dimensions sont supérieures à celles des clés disponibles en possession de l'utilisateur. Avec un produit 5 de type polycaprolatone, préalablement rendu malléable par chauffage, on a constitué une gangue entourant largement l'écrou 10, et on a aménagé, sur la partie supérieure de celle-ci, une réserve de matière malléable au travers de laquelle on a introduit un levier 13 disposé de façon sensiblement radiale. Après refroidissement et durcissement du produit 5 on utilise le levier 13 pour exercer sur l'écrou 10 un couple de serrage ou de desserrage. Dans ce mode de mise en oeuvre, le produit 5 étant en contact avec la totalité de la surface périphérique de l'écrou 10, l'effort que l'on peut ainsi appliquer à celui-ci est optimal.

Le produit 5 de type polycaprolactone peut également constituer un élément de préhension pour d'autres types d'objets que des outils. On peut ainsi l'utiliser dans le domaine du sport, et notamment des sports où il est nécessaire de tenir un accessoire, comme c'est le cas notamment pour le ski, le tennis, l'aviron ou le tir. On peut alors conférer à l'accessoire tenu par le sportif une forme spécifiquement adaptée à la morphologie de celui-ci. Ainsi, dans le domaine du tir, et notamment du tir au pistolet, le maintien de l'arme est considérablement amélioré lorsque la crosse épouse parfaitement la main du tireur. Or, ceci nécessite une mise en forme qui est habituellement une opération longue, délicate et coûteuse à mettre en oeuvre, et qui ne peut généralement pas être effectuée par l'utilisateur lui-même. Par ailleurs, si l'utilisateur souhaite modifier la forme pour l'adapter par exemple à un nouveau type de prise en mains, toute l'opération est à reprendre, ce qui est généralement long et onéreux.

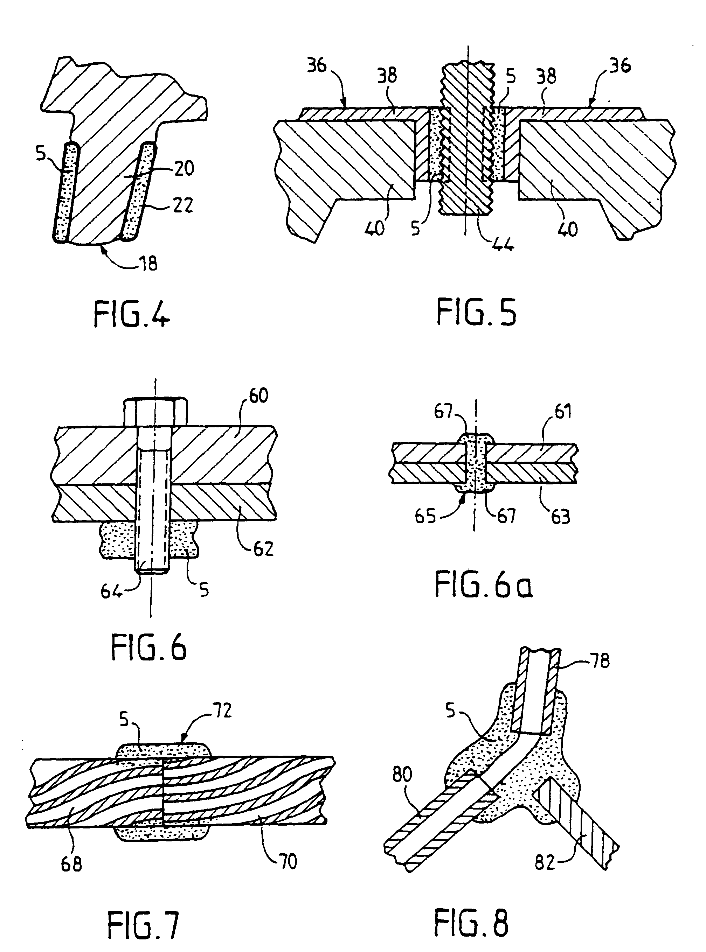

Pour réaliser parfaitement une telle conformation, ainsi que représenté sur la figure 4, on réalise une crosse de pistolet 18 formée d'une âme rigide 20 autour de laquelle on dispose une gaine constituée d'une enveloppe fine 22 en toile ou en matière plastique qui renferme des microbilles d'un produit 5 du type polycaprolactone. Il suffit à l'utilisateur de tremper l'âme 20 de la crosse 18 ainsi gainée dans de l'eau chaude à une température suffisante pour rendre le produit 5 malléable, tout au moins sur sa périphérie, puis, lorsque celui-ci a atteint la malléabilité souhaitée, de prendre en main la crosse 18 dans la position qu'il souhaite adopter pour le tir, pendant les quelques instants nécessaires au produit 5 pour perdre sa malléabilité et épouser la forme de la main du tireur. Pour accélérer le durcissement on peut alors tremper la crosse 18 dans de l'eau froide.

L'utilisateur a ainsi, lui-même, constitué en quelques minutes une crosse adaptée à sa propre morphologie. Si par la suite il souhaite modifier sa position de tir, il lui suffit alors de replonger la crosse 18 dans un récipient contenant de l'eau chaude pour redonner au produit 5 une certaine malléabilité et, en repositionnant sa main dans la nouvelle position souhaitée, remodeler la forme de sa crosse 18. L'utilisateur peut également ajouter un colorant ou une charge telle que notamment de la sciure de bois, au matériau préalablement rendu malléable de manière à jouer sur l'aspect et la couleur de l'objet final.

On peut également mettre en oeuvre la présente invention dans le domaine des dispositifs destinés à assurer le blocage et le maintien d'objets. On peut ainsi suivant l'invention, et comme représenté sur la figure 5, réaliser des mordaches 36 constitués d'une armature 38, par exemple en plomb, et qui sont destinés à être supportés par les mors 40 d'un étau. La partie externe et antérieure des mordaches 36 est recouverte d'une épaisse couche d'un produit 5 du type polycaprolactone. Lorsque l'on souhaite assurer le maintien d'une pièce 44 difficile à maintenir entre les deux plans parallèles formés par les mors 40 de l'étau, telle que par exemple une pièce arrondie ou une tige filetée, on réchauffe la couche de produit 5 solidaire de la face antérieure des mordaches 36, à une température juste nécessaire pour provoquer un début de ramollissement de ceux-ci, puis on serre fortement les mors 40 sur la pièce 44, de façon que le produit 52 se conforme à la forme externe de la pièce 44. Après refroidissement et durcissement du produit 5 on obtient des mordaches 36 dont les faces de serrage respectives sont à la fois rigides et à la forme de la pièce 44, ce qui permet d'assurer un maintien particulièrement efficace de celle-ci.

Suivant l'invention, on peut utiliser un produit du type polycaprolactone pour constituer en tout ou en partie une pièce mécanique. Ainsi, comme représenté sur la figure 6, lorsque l'on souhaite assembler deux éléments mécaniques 60, 62 au moyen d'une vis 64 et que l'on ne dispose pas de l'écrou approprié, soit que celui-ci n'est pas disponible soit qu'il doit, pour des raisons spécifiques, posséder une forme déterminée, on peut, avant ou après l'assemblage, disposer autour de la vis 64, du produit 5, éventuellement contenu dans un sac souple, que l'on a préalablement réchauffé à une température proche de sa température de fusion. Après refroidissement et durcissement du produit, on dispose alors d'un écrou ayant éventuellement une forme spécifique souhaitée.

Comme représente sur la figure 6a, on peut également assembler des éléments tels que deux plaques 61,63 préalablement percées de trous. Les plaques 61,63 sont présentées l'une sur l'autre de telle manière que leurs trous soient sensiblement superposés, puis une quantité de produit 5, préalablement portée à sa température de fusion, est introduite dans les trous en exerçant une pression de part et d'autre de manière à constituer un rivet 65 se terminant de part et d'autre des plaques par une tête de rivet 67.

Comme représenté sur la figure 7, on peut également assurer la jonction de deux éléments, notamment constitués de cordages 68 et 70, autour de l'extrémité desquels on dispose une dose de produit 5 de type polycaprolactone, de façon qu'il constitue un manchon 72. Le produit 5 pénètre dans les divers interstices constitués par les différents brins et torons des cordages 68,70 si bien, qu'après refroidissement et durcissement, le manchon ainsi formé assure le maintien des cordages 68,70 à la manière d'un sertissage. La libération des cordages 68 et 70 peut être effectuée rapidement et facilement par le simple réchauffage du manchon 72.

Comme représenté sur la figure 8, on peut utiliser un produit du type polycaprolactone pour réaliser le raccordement d'éléments 78,80,82 pleins ou creux en ligne droite ou en courbe. A cet effet une quantité de produit 5 est portée à sa température de fusion puis est mise en forme de plaque d'une épaisseur de quelques millimètres. Les extrémités des éléments à raccorder sont placées sur cette feuille de matière encore malléable, puis celle-ci est roulée autour des éléments 78,80,82 en suivant un mouvement tournant, de telle sorte qu'ils soient reliés entre eux sur toute leurs circonférences. Dans un deuxième temps, avant que le matériau ne soit refroidi, l'utilisateur pourra donner l'angle et l'orientation qu'il souhaite aux différents éléments les uns par rapport aux autres en les maintenant ainsi jusqu'au complet refroidissement.

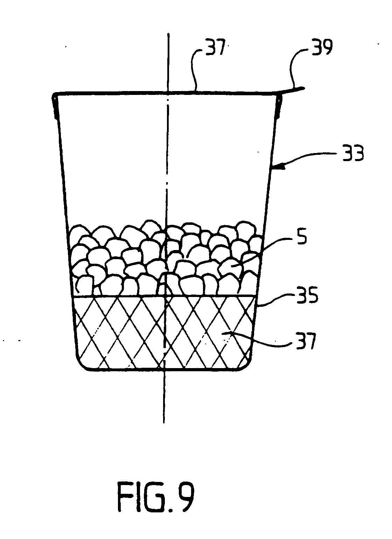

Comme le montre la figure 9, le produit du type polycaprolactone 5 est stocké dans un récipient 33 qui comporte à sa base une chambre fermée 35 dans laquelle sont disposés des moyens de chauffage 37 constitués par des réactifs chimiques de types connus. Le récipient 33 est fermé par un couvercle 37 qui est scellé sur la partie supérieure de celui-ci et qui peut être ouvert au moyen d'une languette de préhension 39. Le présent dispositif est particulièrement facile à mettre en oeuvre puisqu'il suffit, de façon connue dans ce type de récipient, d'activer les réactifs chimiques contenus dans la chambre 35 pour provoquer le chauffage du produit 5.

Afin de réaliser un chauffage homogène de celui-ci, le récipient 33 peut contenir, conjointement au produit 5 un liquide, notamment de l'eau.

## Revendications

1. Utilisation d'une polycaprolactone, malléable à une température se situant aux environs de 60°C et possédant une bonne résistance mécanique à la température ambiante, par chauffage de ladite polycaprolactone, se trouvant à l'état de pastilles, au voisinage d'au moins sa température de ramollissement, conformation manuelle d'un volume déterminé desdites pastilles ramollies de ladite polycaprolactone en le mettant directement au contact d'au moins une partie de la surface externe d'un objet (10, 12, 12a, 44, 64) et maintien en place dudit volume de polycaprolactone (5) jusqu'au refroidissement conduisant à sa rigidification sur ledit objet, la pièce en polycaprolactone ainsi conformée et rigidifiée, constituant une pièce mécanique qui est solidarisée sur ledit objet et conçue pour permettre d'exercer, sur ledit objet, une force efficace à le manoeuvrer.

2. Utilisation selon la revendication 1, pour la réalisation d'un écrou en polycaprolactone par conformation sur une tige filetée ou sur la périphérie d'un écrou existant.

3. Utilisation selon la revendication 1, pour la réalisation d'une clé en polycaprolactone pour la manoeuvre d'un écrou, par conformation sur la périphérie dudit écrou.

4. Utilisation selon la revendication 1, pour la réalisation d'un organe de préhension en polycaprolactone pour outil, par conformation sur une partie dudit outil.

## Patentansprüche

1. Verwendung eines Polycaprolactons, das bei einer Temperatur verformbar ist, die in der Umgebung von 60°C liegt, und bei Umgebungstemperatur eine gute mechanische Festigkeit besitzt, durch Erhitzen dieses Polycaprolactons, das sich im Zustand von Pastillen befindet, bis in Nähe mindestens seiner Erweichungstemperatur, manuelle Formung eines bestimmten Volumens dieser erweichten Pastillen dieses Polycaprolactons, indem man es direkt mit mindestens einem Teil der Außenfläche eines Objekts (10, 12, 12a, 44, 64) in Kontakt bringt, und Halten dieses Polycaprolactonvolumens an seinem Platz bis zur Abkühlung, die zu seiner Erstarrung an diesem Objekt führt, wobei das auf diese Weise geformte und erstarrte Teil aus Polycaprolacton ein mechanisches Teil bildet, das mit dem Objekt fest verbunden ist und ausgelegt ist, um die Ausübung einer Kraft auf das Objekt zu gestatten, die für seine Betätigung wirksam ist.

2. Verwendung nach Anspruch 1 für die Herstellung einer Mutter aus Polycaprolacton durch Formung auf einer Gewindestange oder auf dem Umfang einer vorhandenen Mutter.

3. Verwendung nach Anspruch 1 für die Herstellung eines Schlüssels aus Polycaprolacton für die Betätigung einer Mutter durch Formung auf dem Umfang dieser Mutter.

4. Verwendung nach Anspruch 1 für die Herstellung eines Greiforgans aus Polycaprolacton für ein Werkzeug durch Formung auf einem Teil dieses Werkzeugs.

## Claims

1. Use of a polycaprolactone which is malleable at a temperature of approximately 60°C and which has a good mechanical strength at room temperature, by heating said polycaprolactone, in the form of pellets, close to at least its softening temperature, manual shaping of a given volume of said softened polycaprolactone pellets by bringing same in contact with at least a portion of the outer surface of an object (10, 12, 12a, 44, 64) and keeping said polycaprolactone volume (5) thereon until it cools and stiffens on said object, the polycaprolactone part, so shaped and stiffened, forming a mechanical part which is locked on said objet and adapted to permit the exercise, on said object, a force which is efficient to operate it.

2. Use according to claim 1, for making a polycaprolactone nut on a threaded rod or on the periphery of an existing nut.

3. Use according to claim 1, for making a polycaprolactone key for operating a nut, by shaping on the periphery of said nut.

4. Use according to claim 1, for making a polycaprolactone gripping device for a tool, by shaping on a portion of said tool.
